# EUROPÄISCHE PATENTSCHRIFT

(11) **EP 0 337 119 B1**
(45) Veröffentlichungstag und Bekanntmachung des Hinweises auf die Patenterteilung: **05.05.1993**
(21) Anmeldenummer: 89104249.1
(22) Anmeldetag: 10.03.1989
(51) Int. Cl.: B60R 19/18

(54) **Energieaufnehmender Stossfänger aus polymerem Werkstoff**
Energy absorbing bumper of polymeric material
Pare-choc à absorption d'énergie en matériau polymère

(30) Priorität: 15.04.1988 DE 3812523
(43) Veröffentlichungstag der Anmeldung: 18.10.1989
(73) Patentinhaber: REHAU AG + Co, 95111 Rehau (DE)
(72) Erfinder:

(56) Entgegenhaltungen:
- DE-A- 2 526 914
- DE-A- 3 328 978
- DE-U- 8 804 970
- FR-A- 2 366 960
- US-A- 4 072 334

## Beschreibung

Die Erfindung betrifft einen energieaufnehmenden Stoßfänger aus polymerem Werkstoff für Kraftfahrzeuge, bestehend aus einem an der Karosserie des Kraftfahrzeugs abgestützten, sich horizontal über die Fahrzeugbreite erstreckenden geschlossenen Hohlprofil, das eine der Karosserie abgewandte Vorderwand und eine Rückwand bildet, wobei die Rückwand mindestens zwei übereinanderliegende horizontale Reihen von mit Abstand zueinander angeordneten, sich zu der Vorderwand hin erstreckenden Eindrückungen aufweist, die im Bereich ihrer Stirnwände mit der Vorderwand des Hohlprofils verbunden sind, und wobei oberhalb der obersten Reihe und unterhalb der untersten Reihe von Eindrückungen die Rückwand des Hohlprofils jeweils zu einem in Fahrzeugquerrichtung horizontal durchlaufenden Randsteg ausgeformt ist, der die Fläche der Rückwand zu der Karosserie hin überragt, wobei der oberhalb der obersten Reihe von Eindrückungen angeordnete obere Randsteg mit seiner diesen Eindrückungen zugewandten Begrenzungswand in die oberen Wandbereiche dieser Eindrückungen und der unterhalb der untersten Reihe von Eindrückungen angeordnete untere Randsteg mit seiner diesen Eindrückungen zugewandten Begrenzungswand in die unteren Wandbereiche dieser Eindrückungen übergeht.

Aus der DE-B-3 328 978 ist ein gattungsgemäß Stoßfänger bekannt geworden, der einstückig als geschlossenes Hohlprofil blasgeformt ist. Beim Blasformen sind in die Rückwand wenigstens zwei über die Länge des Stoßfängers verlaufende Reihen von Eindrückungen angebracht, welche durch wenigstens einen Rückwandbereich voneinander getrennt sind. Die Eindrückungen sind außerdem durch entsprechende, querverlaufende Zwischenbereiche voneinander abgetrennt und überbrücken in ihrer Eindrücktiefe die Hohlkammer des Hohlprofils derart, daß die inneren Oberflächen der Eindrückungen wenigstens teilweise mit zugeordneten Innenwandflächen der Vorderwand des Hohlprofils fest verbunden sind.

Eine ähnliche Ausführung eines Stoßfängers ergibt sich auch aus der DE-C-2 526 914.
Die dort beschriebenen Durchdrückungen von der Rückwand zur Vorderwand des Hohlkörpers ziehen sich in Art eines Fünf-Punkt-Rasters über die Rückwand hin.

Die dem Stand der Technik zuzuordnenden Stoßfänger aus polymeren Werkstoffen besitzen eine schlechte Biegesteifigkeit, so daß sie bei Krafteinwirkung relativ schnell vom reversiblen zum irreversiblen Verhalten übergehen. Hier setzt die Erfindung ein, die es sich zur Aufgabe gestellt hat, die Biegesteifigkeit eines Stoßfängers aus polymerem Werkstoff so zu erhöhen, daß die von der Automobilindustrie geforderte reversible Biegebelastung eingehalten werden kann. Erfindungsgemäß wird dazu vorgeschlagen, daß jeweils zwischen zwei übereinanderliegenden Reihen von Eindrückungen die Rückwand des Hohlprofils zu einem in Fahrzeugquerrichtung horizontal durchlaufenden Zwischensteg ausgeformt ist, der die Fläche der Rückwand zu der Karosserie hin überragt, und daß die obere Begrenzungswand jedes Zwischenstegs in die unteren Wandbereiche der oberhalb des jeweiligen Zwischenstegs angeordneten Eindrückungen und die untere Begrenzungswand jedes Zwischenstegs in die oberen Wandbereiche der unterhalb des jeweiligen Zwischenstegs angeordneten Eindrückungen übergeht.

Die das Niveau der Rückwand überragenden, leistenförmigen Stege schaffen über die Länge des erfindungsgemäßen Stoßfängers gesehen, eine erhebliche Verstärkung und damit eine Erhöhung der Biegesteifigkeit.

Die Steifigkeit des Stoßfängers ist eine Funktion der Steghöhe gegenüber dem Niveau der Rückwand. Wird nämlich die Höhe der Stege gegenüber dem Rückwandniveau des Stoßfängers gesteigert, so erhöht sich dementsprechend auch der Wert der Kraftaufnahme bei gleichbleibender Durchbiegung des Stoßfängers.

Es hat sich als vorteilhaft erwiesen, daß auch die Randstege und jeder Zwischensteg in den seitlichen Endbereichen des Stoßfängers in die Fläche der Rückwand auslaufen.

In diesen Endbereichen spielt die Aufprallwiderstand-Eigenschaft des Stoßfängers keine so wesentliche Rolle mehr wie im vorderen Stoßfängerbereich, so daß in den Endbereichen auf die Schockverstärkung durch die Eindrückungen und die erhöhten Längsstege verzichtet werden kann.

Falls es erforderlich sein sollte, kann das Hohlprofil des Stoßfängers zur zusätzlichen Aufprallwiderstand-Verstärkung mit einem schaumförmigen Kunststoff ausgefüllt sein. Dieser Kunststoffschaum kann durch eine vorgegebene Öffnung in das Hohlprofil eingebracht werden, da zwischen den Eindrückungen selbst innerhalb des Hohlprofils Durchgangsöffnungen stehen bleiben, so daß die Hohlkammer als solche zwar von den Eindrückungen und erhöhten Längsstegen und deren Wänden durchsetzt ist, im Prinzip jedoch als Hohlkammer erhalten bleibt. Diese kann dann über die ganze Länge, d.h. auch in den um die Karosserie greifenden Endbereichen von dem schaumförmigen Kunststoff ausgefüllt werden.

Es ist ferner möglich, daß in die Hohlkammer die Rückwand durchdringende Befestigungselemente und/oder Verstärkungselemente eingelassen sind. Solche Befestigungs- und/oder Verstärkungselemente sind erforderlich für die Befestigung des Stoßfängers am tragenden Untergestell der Karosserie. Als Befestigungs- oder Verstärkungselemente können beispielsweise in die Blasform eingelegte Metallteile usw. verwendet werden.

Der erfindungsgemäße Stoßfänger unterscheidet sich von den Stoßfängern des Standes der Technik durch seine besondere Kombination von hoher Steifigkeit, geringer Durchbiegung, hoher Energieabsorption, günstigem Gewicht, günstigem Teilepreis und einstückiger Herstellung. Diese Vorteile werden erzielt durch die äußere Form des Stoßfängers mit der Kombination von Eindrückungen und über das Niveau der Rückwand hinausstehenden leistenförmigen Stegen sowie die Doppelwandigkeit und die teilweise Verschweißung der Eindrückungen an den Innenflächen von Vorderwand und Rückwand.

In der Zeichnung ist ein Ausführungsbeispiel des erfindungsgemäßen Stoßfängers schematisch dargestellt; es zeigt:
Fig. 1 einen Querschnitt durch den Stoßfänger mit vier erhöhten, längsverlaufenden Stegen.
Fig. 2 einen Querschnitt durch den Stoßfänger mit drei erhöhten, längsverlaufenden Stegen.
Fig. 3 einen Teilschnitt des Stoßfängers nach Fig. 2 in Rückansicht.

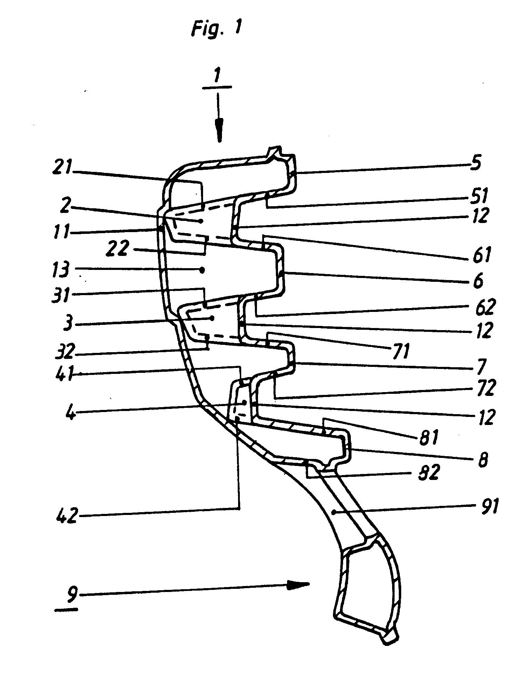

In Fig. 1 ist der erfindungsgemäße Stoßfänger 1 im Querschnitt dargestellt.

Die Vorderwand 11 begrenzt gemeinsam mit der Rückwand 12 den Hohlraum 13. In den Hohlraum 13 verlaufen die Eindrückungen 2, 3, 4, die aufgrund der gewählten Schnittdarstellung gestrichelt dargestellt sind. Die Seitenwand 21 der Eindrückung 2 verläuft im oberen Bereich, d.h. oberhalb der Rückwand 12 in die Seitenwand 51 des längsverlaufenden, erhöhten Steges 5. Die andere Seitenwand 22 der Eindrückung 2 verläuft gleichermaßen über das Niveau der Rückwand 12 hinaus in die Seitenwand 61 des erhöhten Steges 6. Dessen untere Seitenwand 62 verläuft in die obere Seitenwand 31 der Eindrückung 3, deren untere Seitenwand 32 wiederum in die Seitenwand 71 des erhöhten Steges 7 aus läuft. Die Seitenwand 72 des erhöhten Steges 7 verläuft ihrerseits in die Seitenwand 41 der Eindrückung 4, die wiederum mit ihrer unteren Seitenwand 42 in die obere Seitenwand 81 des erhöhten Steges 8 ausläuft. Dessen untere Seitenwand 82 begrenzt in der gezeigten Form das spoilerartige Unterteil 9, welches über die Verbindungsbrücke 91 mit der unteren Seitenwand 82 des erhöhten Steges 8 in Verbindung steht.

Wesentlich für den erfindungsgemäßen Stoßfänger 1 ist die Tatsache, daß über seine gesamte Länge eine gemeinsame Hohlkammer erhalten bleibt, die lediglich von den einzelnen Eindrückungen 2, 3, 4 durchsetzt ist.

Wesentlich ist weiter, daß die Seitenwände 21, 22, 31, 32, 41, 42 der Eindrückungen 2, 3, 4 in die Seitenwände 51, 61, 62, 71, 72, 81 der längsverlaufenden erhöhten Stege 5, 6, 7, 8 übergehen. Diese Verlängerung der Stege von den Eindrückungen in die Erhöhungen und die Tatsache, daß sich die erhöhten Stege längsverlaufend über die gesamte Länge des Stoßfängers hinziehen, gibt diesem seine besondere Steifigkeit und damit seine Biegefestigkeit.

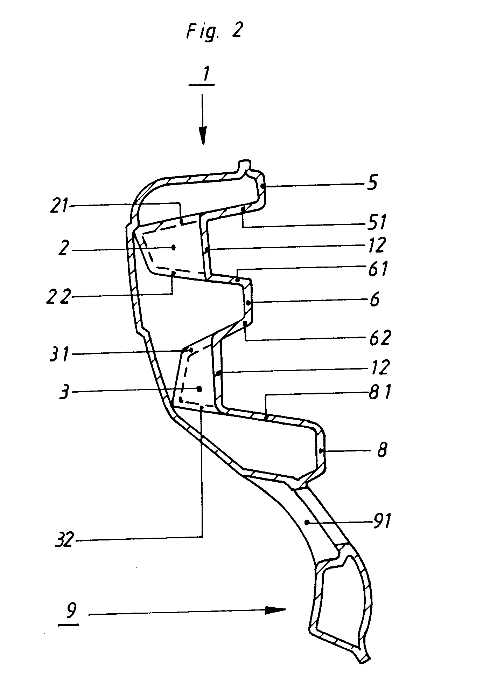

In Fig. 2 ist der erfindungsgemäße Stoßfänger 1 mit lediglich drei erhöhten, längsverlaufenden Stegen 5, 6, 7 und zwei Eindrückungen 2, 3, dargestellt. Gleiche Merkmale haben hier die gleichen Bezugszeichen wie in Fig. 1 erhalten.

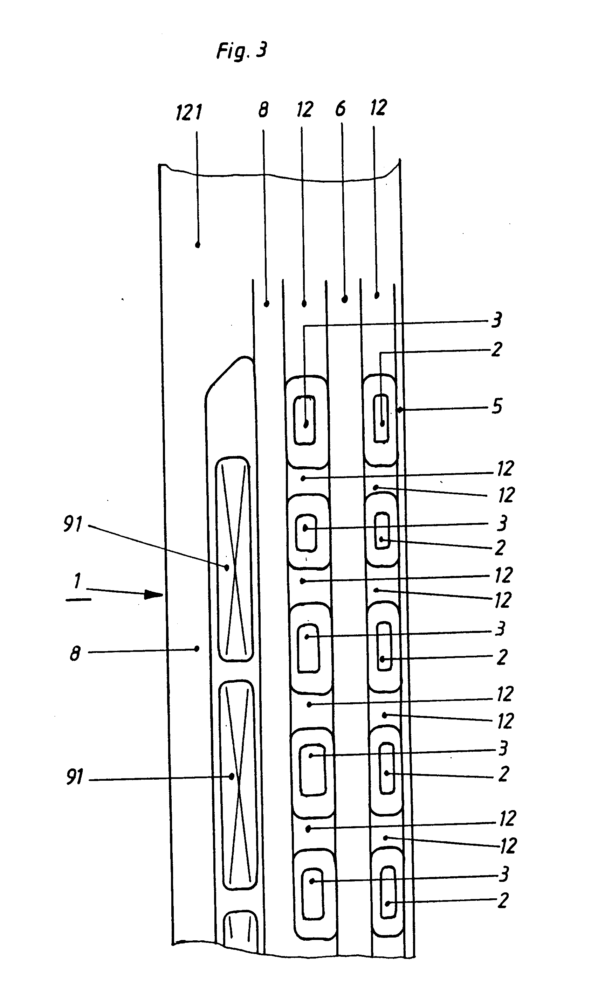

Fig. 3 zeigt den erfindungsgemäßen Stoßfänger 1 im Teilschnitt der Rückansicht. In dieser Darstellung wird deutlich, daß die erhöhten längsverlaufenden Stege 5, 6, 7, 8 erst in den um die Karosserie greifenden Endbereichen 121 der Rückwand 12 auslaufen. Die Rückwand 12 befindet sich mit ihrem Niveau jeweils als Querverbindung zwischen zwei längsverlaufenden, erhöhten Stegen 5,6, 6,7 und 7,8. Die einzelnen Rückwandbereiche 12 trennen auch die einzelnen Eindrückungen 2, 3, 4, von den entsprechend benachbarten Eindrückungen.

## Patentansprüche

1. Energieaufnehmender Stoßfänger (1) aus polymerem Werkstoff für Kraftfahrzeuge, bestehend aus einem an der Karosserie des Kraftfahrzeugs abgestützten, sich horizontal über die Fahrzeugbreite erstreckenden geschlossenen Hohlprofil, das eine der Karosserie abgewandte Vorderwand (11) und eine Rückwand (12) bildet, wobei die Rückwand (12) mindestens zwei übereinanderliegende horizontale Reihen von mit Abstand zueinander angeordneten, sich zu der Vorderwand hin erstreckenden Eindrückungen (2,3,4) aufweist, die im Bereich ihrer Stirnwände mit der Vorderwand (11) des Hohlprofils verbunden sind, und wobei oberhalb der obersten Reihe und unterhalb der untersten Reihe von Eindrückungen die Rückwand des Hohlprofils jeweils zu einem in Fahrzeugquerrichtung horizontal durchlaufenden Randsteg (5,6,7,8) ausgeformt ist, der die Fläche der Rückwand zu der Karosserie hin überragt, wobei der oberhalb der obersten Reihe von Eindrückungen angeordnete obere Randsteg mit seiner diesen Eindrückungen (2) zugewandten Begrenzungswand in die oberen Wandbereiche dieser Eindrückungen und der unterhalb der untersten Reihe von Eindrückungen angeordnete untere Randsteg mit seiner diesen Eindrückungen zugewandten Begrenzungswand in die unteren Wandbereiche dieser Eindrückungen übergeht, dadurch gekennzeichnet, daß jeweils zwischen zwei übereinanderliegenden Reihen von Eindrückungen (2 und 3 bzw. 3 und 4) die Rückwand (12) des Hohlprofils zu einem in Fahrzeugquerrichtung horizontal durchlaufenden Zwischensteg (6 bzw. 7) ausgeformt ist, der die Fläche der Rückwand (12) zu der Karosserie hin überragt, und daß die obere Begrenzungswand (61 bzw. 71) jedes Zwischenstegs (6 bzw. 7) in die unteren Wandbereiche (22 bzw. 32) der oberhalb des jeweiligen Zwischenstegs (6 bzw. 7) angeordneten Eindrückungen (2 bzw. 3) und die untere Begrenzungswand (62 bzw. 72) jedes Zwischenstegs (6 bzw. 7) in die oberen Wandbereiche (31 bzw. 41) der unterhalb des jeweiligen Zwischenstegs (6 bzw. 7) angeordneten Eindrückungen (3 bzw. 4) übergeht.

2. Stoßfänger nach Anspruch 1 mit um die Karosserie greifenden, abgebogenen seitlichen Endbereichen, wobei die Eindrückungen der Rückwand in den seitlichen Endbereichen in die Fläche der Rückwand auslaufen, dadurch gekennzeichnet, daß auch die Randstege (5 und 8) und jeder Zwischensteg (6 und 7) in den seitlichen Endbereichen (121) des Stoßfängers (1) in die Fläche der Rückwand (12) auslaufen.

## Claims

1. Energy-absorbing bumper (1) made of polymeric material for motor vehicles, comprising a closed hollow profile supported on the body of the motor vehicle, extending horizontally throughout the width of the motor vehicle, forming a front wall (11) facing away from the vehicle body and a rear wall (12), whereby the rear wall (12) exhibits at least two horizontal rows, spaced apart one above other, of indentations (2, 3, 4) extending as far as the front wall, the face walls of which are attached to the front wall (11) of the hollow profile and whereby above the uppermost row and below the bottommost row of indentations the rear wall of the hollow profile is in each case formed into a peripheral web (5, 6, 7, 8) running horizontally across the vehicle which projects beyond the surface of the rear wall towards the vehicle body whereby the upper peripheral web arranged above the uppermost row of indentations continues with its terminating wall facing these indentations (2) into the upper wall areas of these indentations and the lower peripheral web arranged below the bottommost row of indentations continues with its terminating wall facing these indentations into lower wall areas of these indentations, characterised by the fact that between each two rows of indentations (2 and 3 or 3 and 4) the rear wall (12) of the hollow profile is formed into an intermediate web (6 or 7) running horizontally across the motor vehicle which projects beyond the surface of the rear wall (12) towards the vehicle body, and that the upper terminating wall (61 and 71) of each intermediate web (6 or 7) continues into the lower wall areas (22 or 32) of the indentations (2 or 3) arranged above the respective intermediate web (6 or 7) and the lower terminating wall (62 or 72) of each intermediate web (6 or 7) continues into the upper wall areas (31 or 41) of the indentations (3 or 4) arranged below the respective intermediate web (6 or 7).

2. Bumper as described in claim 1 with bent, lateral end sections extending around the vehicle body whereby the indentations of the rear wall in the lateral end sections run into the surface of the rear wall, characterised by the fact that the peripheral webs (5 and 8) and each intermediate web (6 and 7) in the lateral end sections (121) of the bumper (1) also run into surface of the rear wall (12).

## Revendications

1. Pare-chocs (1) absorbant l'énergie en matière polymère pour les véhicules, ce pare-chocs se compose d'un profilé creux fermé s'étendant horizontalement sur toute la largeur du véhicule en s'appuyant sur la carrosserie; le profilé creux forme ainsi une paroi avant (11) tournée vers la carrosserie et une paroi arrière (12), cette dernière présentant au moins deux rangées d'empreintes horizontales superposées (2, 3, 4), installées avec une distance entre elles et qui dans la zone de leur face sont reliées à la paroi avant (11) du profilé creux; sachant qu'au-dessus de la rangée supérieure et au-dessous de la rangée inférieure des empreintes, la paroi arrière du profilé creux est moulée respectivement en une bordure (5, 6, 7, 8) continue et horizontale dans le sens tranversal du véhicule. Cette bordure dépasse la surface de la paroi arrière du côté de la carrosserie; sachant que la bordure supérieure installée au-dessus de la rangée supérieure des empreintes avec sa paroi limitative tournée vers ces empreintes (2) passe dans les zones supérieures au-dessus de la rangée supérieure des empreintes, et sachant que la bordure inférieure installée au-dessous de la rangée inférieure des empreintes avec sa paroi limitative tournée vers ces empreintes passe dans les zones inférieures de la paroi, caractérisé par le fait qu'à chaque fois entre deux rangées d'empreintes (2 et 3, voire 3 et 4) superposées, la paroi arrière (12) du profilé creux est constituée comme une bordure intermédaire continue (6, voire 7) horizontale dans la direction transversale du véhicule, cette bordure intermédiaire dépassant la surface de la paroi arrière (12) vers la carrosserie et caractérisé par le fait que la paroi limitative supérieure (61, voire 71) de chaque bordure intermédiaire (6, voire 7) passe dans les zones inférieures de paroi (22, voire 32) des empreintes (2, voire 3) se trouvant au-dessus de la bordure intermédiaire respective (6, voire 7) et que dans la paroi limitative inférieure (62, voire 72) de chaque bordure intermédiaire (6, voire 7) passe dans les zones supérieures (31, voire 41) des empreintes (3, voire 4) se trouvant au-dessous de la bordure intermédiaire respective (6, voir 7).

2. Pare-chocs selon la revendication 1 avec des zones d'extrémité latérales recourbées et tenant autour de la carrosserie, les empreintes de la paroi arrière se terminent en disparaissant dans les zones d'extrémité latérales de la surface de la paroi arrière, caractérisé par le fait que les bordures (5 et 8) et chaque bordure intermédiaire (6 et 7) se terminent aussi en disparaissant dans les zones d'extrémité latérales (121) du pare-chocs (1) dans la surface de la paroi arrière (12).
